# EUROPÄISCHE PATENTANMELDUNG

(11) **EP 1 330 066 A2**
(43) Veröffentlichungstag der Anmeldung: **23.07.2003**
(21) Anmeldenummer: 03002258.6
(22) Anmeldetag: 16.10.1998
(51) Int. Cl.: H04L 7/033, H04L 25/06

(54) **Entzerrerschaltung für digital übertragene Signale**

(30) Priorität: 25.10.1997 DE 19747249; 18.02.1998 DE 19806682
(62) Teilanmeldung aus: 98440228.9
(71) Anmelder: ALCATEL, 75008 Paris (FR)
(72) Erfinder: Bülow, Henning, Dr., 70806 Kornwestheim (DE); Schlag, Erwin, 71665 Vaihingen/Enz (DE)
(74) Vertreter: Rausch, Gabriele, Dr.

(57) **Zusammenfassung**

Digital übertragene Signale, insbesondere optisch übertragene Signale, können große Verzerrungen aufweisen. Bei der optischen Übertragung treten Dispersionseffekte, wie beispielsweise Polarisationsmodendispersion auf (auch kurz PMD genannt), so daß die Signale zeitlich verschmiert werden und unaufgelöst mit starker Verzerrung am Eingang des optischen Empfängers auftreten. Neben der Entzerrung des Signals stellt auch die Rückgewinnung des Signaltaktes aus dem verzerrten Signal ein Problem dar: Der mit üblichen Taktschaltungen regenerierte Signaltakt hat eine starke Phase, deren Größe abhängig von der Signalverzerrung ist. Deshalb muß bei starken Signalverzerrungen üblicherweise die Taktschaltung noch um einen zusätzlichen Phasenschieber erweitert werden.

Es wird nun eine Entzerrerschaltung (ADEQ) mit einer einfach aufgebauten Taktschaltung (A) vorgeschlagen, die mittels Vergleich des Eingangssignals (1) mit einem vorgebbaren Schwellwert (Us) die steigende oder die fallende Flanke des Eingangssignals detektiert, und die den Signaltakt (C) durch Synchronisation auf diese Flanke regeneriert.

Die vorgeschlagene Entzerrerschaltung ist besonders gut einsetzbar in optischen Empfängern, die digitale Signale mit einer sehr hohen Bitrate (z.B. mit 10 Gbit/s) empfangen.

## Beschreibung

Die Erfindung betrifft eine Entzerrerschaltung mit einem rückgekoppelten Filter für die Entzerrung von digital übertragenen Signalen gemäß dem Oberbegriff des Anspruch 1 sowie einen damit ausgestatteten optischen Empfänger nach dem Oberbegriff des nebengeordneten Anspruchs.

Neben der Dämpfung ist die Signaldispersion der optischen Signale das hauptsächlich limitierende Kriterium, das Übertragungsstrecken und Bitraten in faseroptischen Systemen beeinflußt. Die Effekte der Dispersion und ihre Limitierungen können durch geeignete Signalverarbeitung des rückgewonnenen elektrischen Signals ausgeglichen werden. Im praktischen Einsatz ist es dabei notwendig, die Signalverarbeitung adaptiv zu gestalten, da die Dispersionseffekte der Faser sich mit der Zeit verändern. Durch die Dispersionseffekte, beispielsweise hervorgerufen durch Polarisationsmodendispersion (auch kurz PMD genannt), treten Überlappungen von Signalanteilen unterschiedlicher Polarisation und Laufzeit auf. Die Signale werden aufgrund dieser Dispersionseffekte zeitlich verschmiert und kommen unaufgelöst im optischen Empfänger an. Um die Signale, die aufgrund von Dispersionseffekte überlagert im Empfänger ankommen, wieder zu trennen, werden nichtlineare elektronische Filter zur Entzerrung der Signale eingesetzt.

Aus dem Artikel "Adaptive Nonlinear Cancelation for High-Speed Fiber-Optic Systems" von J. Winters und S. Kasturia, erschienen auf den Seiten 971-977 im "Journal of Lightwave Technology", Vol. 10, Nr. 7, Juli 1992, ist eine adaptive Entzerrerschaltung mit einem nichtlinearen elektronischen Filter bekannt. Um die zeitlichen Probleme mit der analogen Rückkopplung im nichtlinearen Filter zu verkleinern, werden zwei Schwellwertentscheider mit unterschiedlichen Schwellwerten parallel zueinander geschaltet. Die Ergebnisse der parallel geschalteten Schwellwertentscheider werden über einen ansteuerbaren Multiplexer zusammengeführt. Die dort in Fig. 7 dargestellte Schaltung verwendet zwei Schwellwertentscheider, deren Ausgänge mit einem Multiplexer verbunden sind. Ein D-Flip-Flop und eine Rückkoppelschleife beschalten den Multiplexer des Filters. Eine periphere Elektronik ermittelt die einzustellenden Schwellwerte und speichert sie über Kondensatoren ab. Die Zeitkonstanten der Schwellwert-Elektronik liegen somit fest. Mit einem solchen nichtlinearen Filter lassen sich Signale entzerren, wenn die Verzögerungen zwischen langsamen und dem schnellen Signalanteilen sich innerhalb eines Zeittakts bewegen.

In DE 197 47 249 wird eine adaptive Entzerrerschaltung mit einem rückgekoppelten Filter vorgeschlagen, das mindesten vier Schwellwertentscheider, mindestens einen Multiplexer sowie eine Verzögerungseinheit enthält, die ein verzögertes Signal zur Beschaltung des Multiplexers rückkoppelt. Das zu entzerrende Eingangssignal durchläuft die mindestens vier Schwellwertentscheider parallel und die Ausgangssignale der Schwellwertentscheider werden von dem mindestens einem Multiplexer auf die Verzögerungseinheit geschaltet. Die Verzögerungseinheit besteht aus mindestens zwei Verzögerungsstufen, deren verzögerte Signale den mindestens einen Multiplexer schalten. Dadurch wird erreicht, daß Echoverzögerungen zwischen langsamen und schnellen Signalanteilen über mehrere Zeittakte hinaus entzerrt werden können. Weiterhin können Verzerrungen unterschiedlichen Ursprungs , wie PMD (Polarisations-Modendispersion) und chromatische Dispersion die gleichzeitig auftreten, ebenfalls reduziert werden. Weiterhin ist es möglich, die Schwellwerte über eine externe Einheit an die Änderungen des Dispersionsverhaltens der Übertragungsfaser anzupassen, ohne daß die Schwellwerteinstellung einer zeitkritischen Rückkopplung folgen muß.

Zur Rückgewinnung des Signaltaktes, mit dem die Schwellwertentscheider angesteuert werden, können herkömmliche Taktschaltungen mit phasenveriegelten Schleifen, sogenannte PLL-Schaltungen (phase locked loop), verwendet werden. Jedoch kommt es bei sehr starken Verzerrungen, die beispielsweise bei einer großen PDM auftreten, zu folgendem Problem: Der mit üblichen Taktschaltungen regenerierte Signaltakt hat eine starke Phasenschwankung, deren Größe abhängig von der Signalverzerrung ist. Deshalb muß bei starken Signalsverzerrungen üblicherweise die Taktschaltung noch um zusätzliche Phasenschieber erweitert werden, die als adaptive Regler in den Taktpfad eingefügt werden, um die im Phasenschwankungen zu kompensieren.

Aufgabe der Erfindung ist es, die eingangs genannte Entzerrerschaltung mit einer einfachen Taktschaltung zu versehen, die auch von stark verzerrten Signale einen möglichst phasenstarren Signaltakt zur Entzerrrung des Signals ableiten kann.

Die Aufgabe wird gelöst durch eine Entzerrerschaltung, die mit einer erfindungsgemäßen Taktschaltung ausgestattet ist, die mittels Vergleich des Eingangssignals mit einem vorgebbaren Schwellwert die steigende oder die fallende Flanke des Eingangssignals detektiert, und die den Signaltakt durch Synchronisation auf diese Flanke regeneriert.

Außerdem wird ein optischer Empfänger mit einer solchen erfindungsgenäßen Entzerrerschaltung vorgeschlagen.

Die erfindungsgemäße Taktschaltung ist einfach aufgebaut und kann auch zur Entzerrung von Signalen eingesetzt werden, die eine hohe Bitrate (z.B. 10 Gbit/s) haben. In diesem Zusammenhang sind besonders die optisch übertragenen Signale zu nennen.

Besonders vorteilhafte Ausgestaltungen der Erfindung ergeben sich aus den Unteransprüchen:

Danach kann die Entzerrerschaltung besonders vorteilhaft ausgestaltet werden, indem die Taktschaltung mit einer ersten Schaltung versehen wird, die das Eingangssignal mit dem vorgebbaren Schwellwert vergleicht, um die Amplitude des Eingangssignals auf einen durch den Schwellwert vorgegebenen Wertebereich zu begrenzen, und die die steigende oder die fallende Flanke des amplitudenbegrenzten Eingangssignals innerhalb eines vorgebbaren Zeitfensters detektiert, um Ausgangspulse gleicher Zeitdauer zu erzeugen. Die Flanke wird z.B. durch Abtastung zu unterschiedlichen Zeitpunkten und durch Vergleich dieser Abtastwerte detektiert. Durch die Amplitudenbegrenzung wird die Flankendetektion besonders einfach und sicher.

Besonders vorteilhaft ist es, wenn die Taktschaltung zusätzlich eine zweite Schaltung enthält, die der ersten Schaltung nachgeschaltet ist und die aus den Ausgangspulsen durch Synchronisation auf dessen Flanken den Signaltakt regeneriert. Zur weiteren Stabilisierung der Flankendetektion wird also zusätzlich eine phasenverriegelte Schleife (PLL) oder ein Filter nachgeschaltet.

Außerdem ist es von Vorteil, wenn die erste Schaltung ein flankengetriggertes Monoflop ist mit einem Totzeitglied, das das amplitudenbegrenzte Eingangssignal um die Zeitdauer verzögert, die die Größe des Zeitfensters bestimmt und die kleiner als etwa die halbe Bitdauer des Eingangssignales ist, mit einer Inverterstufe, die das zeitverzögerte Eingangssignal invertiert, und mit einem UND-Gatter, das das amplitudenbegrenzte Eingangssignal und das invertierte, zeitverzögerte Eingangssignal miteinander logisch verknüpft, um die Ausgangspulse zu erzeugen. Durch diese einfachen Maßnahmen wird ein Zeitfenster über das amplituden begrenzte Signal gelegt, um sicherzustellen, daß auch bei besonders großer Signalverzerrung nur die ansteigende (positive) oder nur die abfallende (negative) Flanke detektiert wird.

Ein weiterer Vorteil ergibt sich, wenn die zweite Schaltung, die vorzugsweise eine phasenverriegelte Schleife (PLL) ist, sich auf die ansteigende Flanke der Ausgangspulse aufsynchronisiert. Dadurch wird eine stabiliesierte Detektion der positiven Flanke erzielt, d.h. derjenigen Flanke, die nicht von Echoanteilen im Signal gestört ist.

Es ist auch besonders vorteilhaft, wenn die Entzerrerschaltung zusätzlich zur Taktschaltung mit einer Detektorschaltung ausgestattet ist, die zur Veänderung des Schwellwertes des mindestens einen getakteten Schwellwertentscheiders, den das rückgekoppelte Filter enthält, das Ausgangssignal des Filters mit dem um die Filter-Durchlaufzeit verzögerten Eingangssignal vergleicht und daraus eine Signalgüte des entzerrten Ausgangssignales ableitet, die den Schwellwert bestimmt. Die Entzerrerschaltung enthält also zusätzlich eine Schaltung, die das Filter in Abhängigkeit von der Signalgüte einstellt. Da die Taktschaltung einen stabilen Signaltakt liefert, kann diese Schaltung einfach aufgebaut sein; insbesondere werden keine Adaptionsmittel zum Ausgleich von Phasenschwankungen benötigt. Als Schaltung eignet sich besonders ein Augendetektor, der das Augendiagramm des entzerrten Ausgangsignales ermittelt und der eine sich entsprechend der Augenöffnung ändernde Spannung erzeugt, die die Signalgüte angibt.

Die Erfindung und die sich daraus ergebenden Vorteile werden nun im folgenden anhand eines Ausführungsbeispiels näher beschrieben. Dabei wird auf Zeichnungen Bezug genommen, die folgende schematische Darstellungen wiedergeben:
- Fig. 1,: die das Blockschaltbild einer Entzerrerschaltung für einen optischen Empfänger zeigt;
- Fig. 2,: die den Aufbau einer Taktschaltung für diese Entzerrerschaltung zeigt;
- Fig. 3,: die ein rückgekoppeltes Filter für diese Entzerrerschaltung zeigt; und
- Fig. 4,: die Signalverläufe eines gesendeten, eines verzerrt empfangenen und eines im Empfänger entzerrten optischen Signales zeigt.

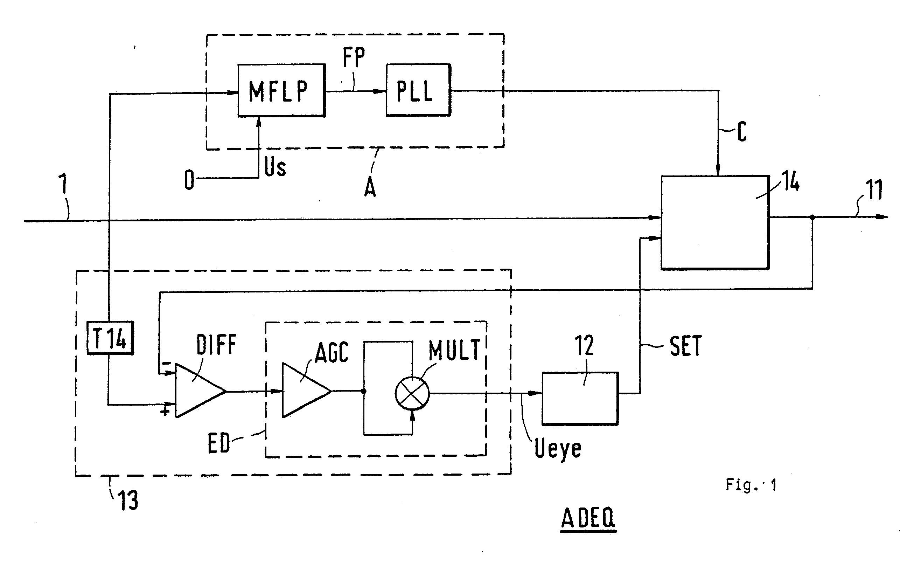

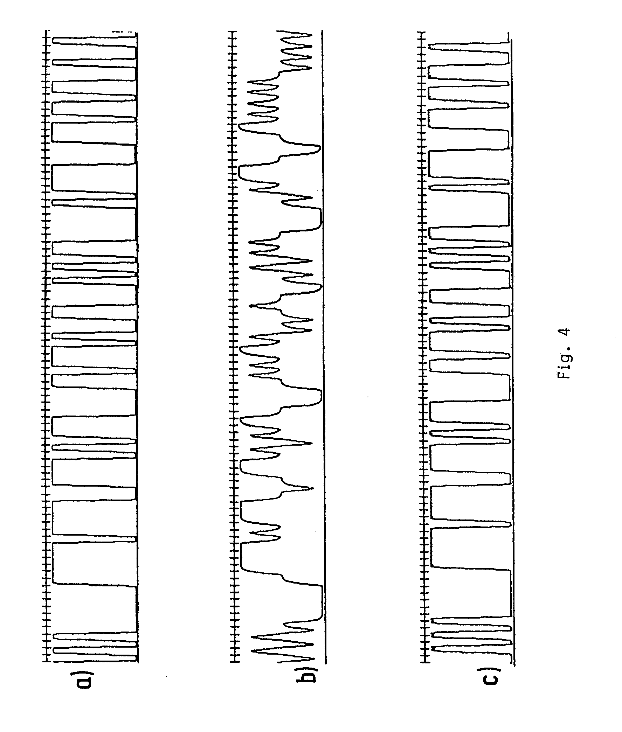

Fig. 1 zeigt eine Entzerrerschaltung ADEQ, die Teil eines optischen Empfängers ist, der digital übertragene Signale empfängt. Das von dem Empfänger empfangene Signal wird als Eingangssignal 1 auf den Eingang der Entzerrerschaltung geführt, die daraus das Ausgangssignal 11 bildet. Bevor die Fig. 1 näher beschrieben wird, wird zunächst anhand der Fig. 4 die Wirkung der erfindungsgemäßen Entzerrerschaltung beschrieben.

Fig. 4 zeigt folgende drei schematisch dargestellte Signalverläufe:

Als erstes ist der in a Signalverlauf des gesendeten Signales S dargestellt, das mit einer Übertragungsrate von 10 Gbit/s an den optischen Empfänger gesendet wird. Das vom Sender S erzeugte Signal wird über eine optische Übertragungsstrecke an den Empfänger gesendet, wobei diese optische Übertragung starke Verzerrung hervorruft.

Der zweite Signalverlauf b zeigt das am optischen Empfänger auftretende Eingangssignal, das durch die starken Verzerrungen gestört ist. Als Beispiel für eine starke Verzerrung soll hier eine durch PMD (Polarisationsmodendispersion) hervorgerufene Verzerrung betrachtet werden mit folgenden Parametern: Δτ = 1,5 Bitperioden und δ = 0,5 . Das bedeutet, daß das stufige Eingangssignal am opto-elktronischen Wandler des Empfängers hier beispielsweise für einen Laufzeitunterschied von 1,5 Perioden sowie einer gleichen Intensitätsverteilung zwischen den unterschiedlichen Polarisationsmoden aufgetragen ist. Wie man erkennen kann, ist das Eingangssignal stufig strukturiert, da Polarisationsanteile des Signals schnell und langsam über die Glasfaser transportiert werden.

Aus dem verzerrten Eingangssignal wird mittels der Entzerrerschaltung das Ausgangssignal gewonnen, dessen Signalverlauf ebenfalls in Fig. 4c schematisch dargestellt ist. Wie die Signalverläufe zeigen entspricht das Ausgangssignal dem vom Sender erzeugten Sendesignal, d.h. es wurde mittels der Entzerrerschaltung vollständig zurückgewonnen. Aufgrund der Übertragungsdauer ist lediglich die Zeitlage des Ausgangssignales gegenüber der Zeitlage des Sendesignales verschoben.

Der Aufbau und die Arbeitsweise der erfindungsgemäßen Entzerrerschaltung wird nun im weiteren anhand der Figuren 1 bis 3 beschrieben:

Die in Fig. 1 schematisch dargestellte Entzerrerschaltung ADEQ hat ein rückgekoppeltes Filter 14, auf das das Eingangssignal 1 geführt wird und das das Ausgangssignal 11 liefert. Außerdem hat die Entzerrerschaltung eine Taktschaltung A, die aus dem Eingangssignal 1 den Signaltakt C zurückgewinnt, um ihn auf den Takteingang des rückgekoppelten Filters 14 zu führen. Weiterhin enthält die Entzerrerschaltung eine Detektorschaltung 13 mit zwei Eingängen, auf die das zu entzerrende Eingangssignal 1 sowie das entzerrte Ausgangssignal 11 geführt werden und die eine Ausgangsspannung Ueye erzeugt, die die Signalgüte des entzerrten Ausgangssignales 11 angibt.

Darüberhinaus enthält die Entzerrerschaltung eine der Detektorschaltung 13 nachgeschaltete Steuerschaltung 12, die aus der Spannung Ueye Steuersignale, insbesondere Schwellwerte SET erzeugt, um die Filterparameter des rückgekoppelten Filters 14 einzustellen.

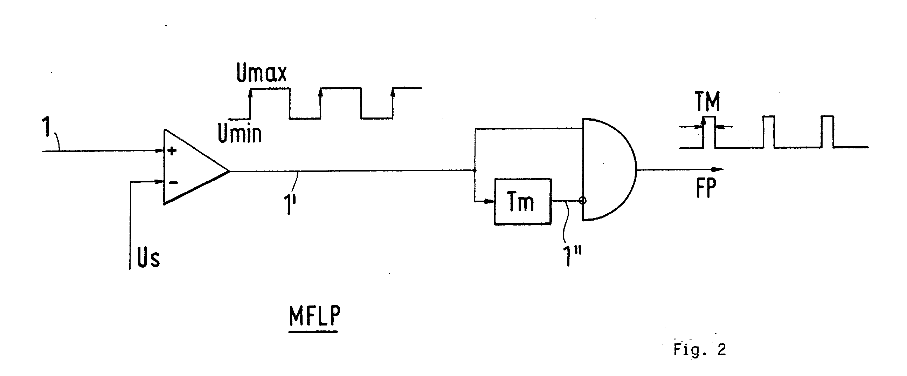

Die Taktschaltung A enthält eine erste Schaltung MFLP, die das Eingangssignal 1 mit einem vorgebbaren Schwellwert Us vergleicht und die Ausgangspulse FP erzeugt. Außerdem enthält die Taktschaltung A eine der ersten Schaltung nachgeschaltete zweite Schaltung PLL, die aus den Ausgangspulsen FP durch Synchronisation auf dessen Flanken den Signaltakt C erzeugt. Der Aufbau und die Arbeitsweise der Taktschaltung A wird später noch eingehend anhand der Fig. 2 beschrieben.

Die in Fig. 1 gezeigte Detektorschaltung 13 enthält einen Differenzierer DIFF, der der das Eingangssignal 1 mit dem Ausgangssignal 11 vergleicht und der ein Differenzsignal erzeugt. Das Eingangssignal 1 wird am Eingang des Differenzierers durch ein Totzeitglied um die Filter-Duchlaufzeit T14 verzögert, um in derselben Zeitlage wie das Ausgagnssignal 11 am Differenzierer anzuliegen. Außerdem enthält die Detektorschaltung 13 einen dem Differenzierer nachgeschalteten Augendetektor ED, der aus dem Differenzsignal die Spannung Ueye erzeugt, die die Signalgüte des Ausgangssignales 11 angibt. Dazu enthält der Augendetektor ED einen Eingangsverstärker AGC und einen nachgeschalteten Multiplizierer MULT, der einer Mischstufe entspricht. Durch Verstärkung des Differenzsignales in dem Verstärker AGC (automatic gain control) und durch die anschließende Verarbeitung in der Mischstufe MULT wird die Spannung Ueye erzeugt. Die Spitzen-Spitzen-Spannung der Augenöffnung wird in der Mischstufe konstant gehalten. Sie die sogenannte Augenöffnung wieder, die ein Maß für die Güte des Ausgangssignales 11 darstellt. Aus dieser Spannung Ueye werden in der nachgeschalteten Steuerschaltung 12 Filterparameter, insbesondere Schwellwerte SET, erzeugt, die das rückgekoppelte Filter 14 adaptiv einstellen.

Fig. 1 zeigt, daß das rückgekoppelte Filter 14 von den folgenden aufbereiteten Signalen angesteuert wird: Erstens von dem Signaltakt C, den die erfindungsgemäße Taktschaltung A regeneriert und zweitens von den Schwellwerten SET, die mittels der Augendetektorschaltung erzeugt werden, um die Filterparameter einzustellen. Beide Maßnahmen können unabhängig voneinander eingesetzt werden, um die Arbeitsweise des rückgekoppelten Filters zu verbessern. Das bedeutet, daß erstens die Entzerrerschaltung auch schon durch die Taktschaltung allein so verbessert werden kann, daß ein phasenstarrer stabiler Takt erzeugt wird, und daß zweitens die Entzerrerschaltung auch schon durch die Detektorschaltung allein so verbessert werden kann, daß das rückgekoppelte Filter in Abhängigkeit von der Signalgüte adaptiv eingestellt wird. Es ist jedoch besonders vorteilhaft beide Maßnahmen zusammen einzusetzen, weil dadurch erreicht wird, daß das Filter 14 bereits von einem stabilisierten Signaltakt C angesteuert wird und somit ein phasenstabilisiertes Ausgangssignal 11 liefert, daß wiederum einfacherer in der Augendetektorschaltung ED verarbeitet werden kann. Da das Ausgangssignal 11 stabilisiert ist, werden innerhalb der Augendetektorauswerteschaltung 12 keine Signalverarbeitungsstufen benötigt, die Phasenschwankungen im Ausgangssignal ausgleichen müßten.

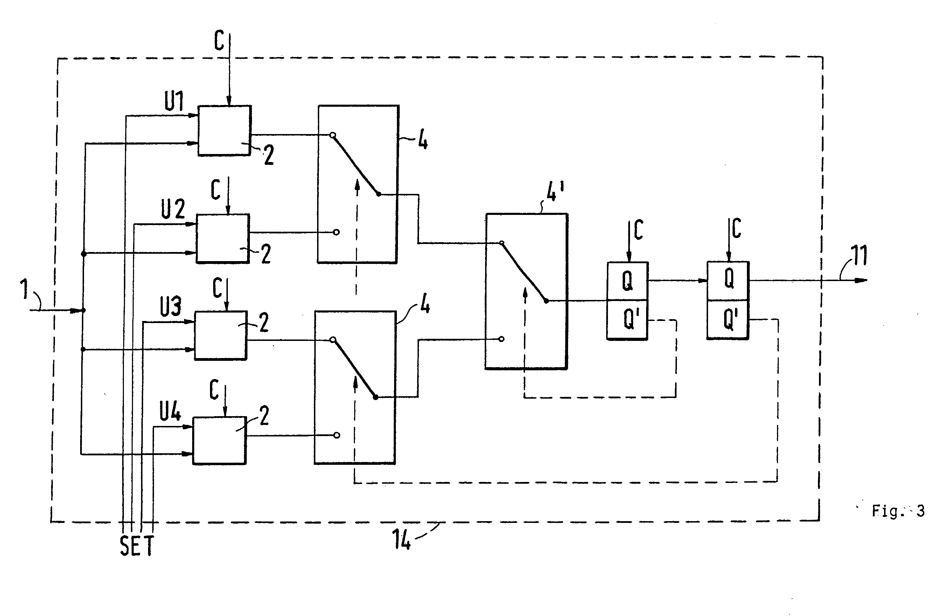

Bevor der Aufbau des rückgekoppelten Filters 14 anhand der Fig. 3 näher beschrieben wird, wird zunächst Fig. 2 beschrieben, die den schematischen Aufbau der erfindungsgemäßen Taktschaltung A zeigt:.

In Fig. 2 ist die erste Schaltung MFLP gezeigt, die aus dem Eingangssignal 1 Ausgangspulse FP mit gleicher Zeitdauer TM zurückgewinnt. Diese erste Schaltung hat die Funktion eines flankengetriggerten Monoflops und enthält am Eingang einen Differenzierer oder einen Schmitt-Trigger, der das Eingangssignal 1 mit einem Schwellwert Us vergleicht. Diesem Differenzierer ist ein UND-Logik-Gatter nachgeschaltet, daß einen invertierten und einen nichtinvertierten Eingang hat. Die Ausgangsspannung des Differenzierers wird direkt auf den nichtinvertierten Eingang geführt und indirekt über ein Totzeitglied Tm auf den invertierten Eingang geführt. Am Ausgang des UND-Gatters erscheinen dann die Ausgangspulse FP mit der gleichen Zeitdauer TM. Diese Ausgangspulse FP werden dann auf die nicht in Fig. 2 dargestellte zweite Schaltung (siehe PLL in Fig.1) geführt.

Die Arbeitsweise des in Fig. 2 dargestellten flankengetriggerten Monoflops MFLP ist die folgende:

Durch den Vergleich des Eingangssignales 1 mit dem Schwellwert Us innerhalb des Differenzierers wird das Eingangssignal 1 zunächst amplitudenbegrenzt, so daß im Falle einer logischen "0" sich eine minimale Spannung Umin einstellt und im Falle einer logischen "1" sich eine maximale Spannung Umax einstellt. Wird ein Schmitt-Trigger eingesetzt, so wird ein Ausgangssignal erzeugt, dessen Pegel zwischen "0" und "1" schwankt (binärer Wertebereich). Der Schwellwert Us ist so gewählt, daß er etwa ein Viertel bis ein Drittel der Amplitude des Eingangssignales 1 beträgt. Dadurch wird erreicht, daß eine positive Flanke detektiert wird, sobald der Signalverlauf des Eingangssignales 1 abrupt ansteigt (vergl. Fig. 4) und solange noch keine Störungen aufgrund von Echoanteilen auftreten können. Deshalb erzeugt der Differenzierer an seinem Ausgang ein amplitudenbegrenztes Signal 1', das abrupt zwischen Umin und Umax wechselt, wobei seine positive Flanke weitgehend exakt der positiven Flanke des Eingangssignales 1 entspricht. Es ist auch möglich die fallende Flanke, also die negative Flanke, zu detektieren. Jedoch ist es vorteilhaft, die positive Flanke zu detektieren, da diese noch nicht durch Echoanteile gestört ist (s. auch Fig. 4).

Das amplitudenbegrenzte Eingangssignal 1' wird in der nachfolgenden Logikschaltung weiter verarbeitet zu den Ausgangsimpulsen FP. Durch die Beschaltung des UND-Gatters mit dem Totzeitglied Tm wird erreicht, daß das amplitudenbegrenzte Eingangssignal 1' einer Zeitfensterfunktion unterworfen wird, wobei die positive Flanke erhalten bleibt und die späteren Signalanteile ausblendet werden. Daher besteht das Ausgangssignal des UND-Gatters aus Ausgangspulsen FP mit der gleichen Breite TM. Diese Ausgangspulse könnten bereits als Signaltakt für die Ansteuerung des rückgekoppelten Filters dienen; sie sollen jedoch in der zweiten Schaltung noch durch eine nachgeschaltete Synchronisationsstufe oder durch ein nachgeschaltes Filter stabilisiert werden. (s. PLL in Fig. 1).

Die Fig. 3 zeigt den schematischen Aufbau des rückgekoppelten Filters 14, der aus dem verzerrten Eingangssignal 1 das entzerrte Ausgangssignal 11 bildet und der von dem Signaltakt C angesteuert wird sowie von den Filterparametern SET adaptiv eingestellt wird. Als rückgekoppeltes Filter kann eine Schaltung mit nur einem getakteten Schwellwertentscheider verwendet werden. Vorzugweise werden aber mindestens zwei Schwellwertentscheider eingesetzt, in diesem Ausführungsbeispiel genau vier. Das in Fig. 3 dargestellte adaptive Filter 14 entspricht der bereits in der Deutschen Patentanmeldung DE 1 9747249 vorgeschlagenen Schaltung (siehe dort Fig. 1).

Fig. 3 zeigt vier Schwellwertentscheider 2, die parallel zueinander geschaltet sind und eingangsseitig mit dem Eingangssignal 1 verbunden sind. Die Schwellwertentscheider 2 weisen weitere Eingänge für die Schwellwerte SET (die unterteilt sind in die Spannungen U₁, U₂, U₃ und U₄) sowie für den Signaldatentakt C auf. Die Ausgänge der Schwellwertentscheider 2 liegen jeweils paarweise an einer Multiplexer-Stufe 4 an. Die Ausgänge der ersten Multiplexer-Stufe 4 sind mit den Eingängen einer weiteren Multiplexer-Stufe 4' verbunden. Der Ausgang dieses Multiplexers 4'liegt am Eingang eines D-Flip-Flops an, dessen Q-Ausgang mit dem Eingang eines Latch-Flip-Flop verbunden ist. Der invertierte Q'-Ausgang des D-Flip-Flop ist in den Multiplexer 4 der zweiten Stufe rückgekoppelt. Der Ausgang Q des Latch-Flip-Flops liefert das rekonstruierte Ausgangssignal 11. Der invertierte Q'-Ausgang des Latch-Flip-Flops wird über die Rückkopplungsschleife in die erste Multiplexer-Stufe 4 rückgekoppelt.

Das Eingangssignal 1 wird auf die vier Schwellwertentscheider 2 aufgeteilt. Jeder Schwellwertentscheider 2 besitzt eine individuelle Schwelle (die Spannungen U₁₋₄). Die Einstellung dieser Schwellwerte SET geschieht über eine digitale Prozessoreinheit 12, die die Augenöffnung (Spannung Ueye) am Ausgang der Detektorschaltung 13 (s. Fig1) auswertet. Aus der gemessenen Augenöffnung und durch deren Änderung wird also eine Anpassung der Schwellwerte U₁₋₄ errechnet. Je nach Schwellwert liefern die Ausgänge der Schwellwertentscheider 2 logische Signale "1" oder "0", die in der ersten Multiplexerstufe 4 anliegen. Über die zweite Multiplexerstufe 4' geht ein Signal an das D-Flip-Flop, das als Master-Slave-Flip-Flop dient und das eingehende Signal um einen Datentakt verzögert.

Da es sich hier um ein Master-Slave-Flip-Flop handelt ist die Speicherung des Signals sehr sicher und die Zeitverzögerung zwischen Eingangs- und Ausgangssignal beträgt gerade einen Datentakt. Solange der Takt auf logisch "1" ist, wird die Eingangsinformation in den Master eingelesen. Der Ausgangszustand bleibt unverändert, da der Slave blockiert ist. Wenn der Takt auf logisch "0" geht, wird der Master blockiert und auf diese Weise der Zustand eingefroren, der unmittelbar vor der negativen Taktflanke angelegen hat. Gleichzeitig wird der Slave freigegeben und der Zustand des Masters an den Ausgang übertragen. Es gibt keinen Taktzustand, bei dem sich die Eingangsdaten unmittelbar auf den Ausgang auswirken. Daher wird ein solches Flip-Flop für eine sichere Detektion und unabhängige Auswertung des Eingangssignals verwendet.

Für die zeitkritischere Rückkopplungsschleife kann ein Master-Slave-Flip-Flop oder ein schnelles Latch-Flip-Flop, also ein transparentes Flip-Flop, eingesetzt werden, das ohne eine weitere Verzögerung die erste Multiplexerstufe 4 beschaltet. Der Einsatz des Latch-Flip-Flop ist bei einer Ausführung mit zwei Rückkopplungsschleifen notwendig, da die zweite Schleife sehr zeitkritisch ist. Eine solche Schaltung mit vier Schwellwertentscheidern kann Signalverzögerungen zwischen den beiden Polarisationsmoden eines Bit von 0 bis etwa 200 ps bei 10 Gbit/s optimal ausgleichen.

Die Schwellwerte SET der Schwellwertentscheider 2 werden zunächst aufgrund von Messungen und von Variationen der Schwellwerte optimal eingestellt und können später über die digitale Prozessoreinheit 12 nachgeregelt werden, wenn sich das Dispersionsverhalten der Faser mit der Zeit ändert.

Die Erfindung wurde am Beispiel eines optischen Empfängers beschrieben, sie ist jedoch auch einsetzbar in Empfängern für nicht-optische Signale, insbesondere in Empfängern für digitale Breitbandnetze, in denen Signale drahtgebunden oder drahtlos übertragen werden.

## Patentansprüche

1. Entzerrerschaltung (ADEQ) für digital übertragene Signale mit einem rückgekoppelten Filter (14), das mindestens einen von dem Signaltakt (C) getakteten Schwellwertentscheider (2) enthält, den das zu entzerrende Eingangssignal (1) der Entzerrerschaltung durchläuft und dessen Schwellwert (SET) das Ausgangssignal (11) der Entzerrerschaltung verändert,
**gekennzeichnet durch**
eine Taktschaltung (A), die mittels Vergleich des Eingangssignals (1) mit einem vorgebbaren Schwellwert (Us) die steigende oder die fallende Flanke des Eingangssignals (1) detektiert, und die den Signaltakt (C) **durch** Synchronisation auf diese Flanke regeneriert.

2. Entzerrerschaltung (ADEQ) nach Anspruch 1,
**dadurch gekennzeichnet, daß** die Taktschaltung (A) eine erste Schaltung (MFLP) enthält, die das Eingangssignal (1) mit dem vorgebbaren Schwellwert (Us) vergleicht, um die Amplitude des Eingangssignals auf einen durch den Schwellwert vorgegebenen Wertebereich (Umin; Umax) zu begrenzen, und die die steigende oder die fallende Flanke des amplitudenbegrenzten Eingangssignals innerhalb eines vorgebbaren Zeitfensters detektiert, um Ausgangspulse (FP) gleicher Zeitdauer (Tm) zu erzeugen.

3. Entzerrerschaltung (ADEQ) nach Anspruch 2,
**dadurch gekennzeichnet, daß** die Taktschaltung (A) eine zweite Schaltung (PLL) enthält, die der ersten Schaltung (MFLP) nachgeschaltet ist und die auf die Ausgangspulse (FP) den Signaltakt (C) synchronisiert oder die aus den Ausgangspulsen eine Signaltaktfrequenz herausfiltert.

4. Entzerrerschaltung (ADEQ) nach Anspruch 2,
**dadurch gekennzeichnet, daß** die erste Schaltung (MFLP) ein flankengetriggertes Monoflop (MFLP) ist mit einem Totzeitglied (Tm), das das amplitudenbegrenzte Eingangssignal (1') um die Zeitdauer (TM) verzögert, die die Größe des Zeitfensters bestimmt und die kleiner als die halbe Bitdauer des Eingangssignales (1) ist, mit einer Inverterstufe, die das zeitverzögerte Eingangssignal (1") invertiert, und mit einem UND-Gatter, das das amplitudenbegrenzte Eingangssignal (1') und das invertierte, zeitverzögerte Eingangssignal (1") miteinander logisch verknüpft, um die Ausgangspulse (FP) zu erzeugen.

5. Entzerrerschaltung (ADEQ) nach Anspruch 3,
**dadurch gekennzeichnet, daß** die zweite Schaltung eine phasenverriegelte Schleife (PLL) ist, die sich auf die Ausgangspulse (FP) aufsynchronisiert.

6. Entzerrerschaltung (ADEQ) nach Anspruch 1,
**gekennzeichnet durch** eine Detektorschaltung (13), die zur Veänderung des Schwellwertes (SET) des mindestens einen getakteten Schwellwertentscheiders (2), den das rückgekoppelte Filter (14) enthält, das Ausgangssignal (11) des Filters mit dem um die Filterdurchlaufzeit (T14) verzögerten Eingangssignal (1) vergleicht und daraus eine Signalgüte (Ueye) des entzerrten Ausgangssignales (11) ableitet, die den Schwellwert (SET) bestimmt.

7. Entzerrerschaltung (ADEQ) nach Anspruch 6,
**dadurch gekennzeichnet, daß** die Detektorschaltung (13), das Augendiagramm des entzerrten Ausgangsignales (11) ermittelt und eine sich entsprechend der Augenöffnung ändernde Spannung (Ueye) erzeugt, die die Signalgüte angibt.

8. Optischer Empfänger mit einer Entzerrerschaltung (ADEQ) für digital übertragene Signale, die ein rückgekoppeltes Filter (14) enthält, das mindestens einen von dem Signaltakt (C) getakteten Schwellwertentscheider (2) enthält, den das zu entzerrende Eingangssignal (1) der Entzerrerschaltung durchläuft und dessen Schwellwert (SET) das Ausgangssignal (11) der Entzerrerschaltung verändert,
**gekennzeichnet, durch**
eine Taktschaltung (A), die mittels Vergleich des Eingangssignals (1) mit einem vorgebbaren Schwellwert (Us) die steigende oder die fallende Flanke des Eingangssignals (1) detektiert, und die den Signaltakt (C) **durch** Synchronisation auf diese Flanke regeneriert.

9. Optischer Empfänger nach Anspruch 8,
**dadurch gekennzeichnet, daß** die Taktschaltung (A) eine erste Schaltung (MFLP) enthält, die das Eingangssignal (1) mit dem vorgebbaren Schwellwert (Us) vergleicht, um die Amplitude des Eingangssignals auf einen durch den Schwellwert vorgegebene Wertebereich (Umin; Umax) zu begrenzen, und die die steigende oder die fallende Flanke des amplitudenbegrenzten Eingangssignals (1') innerhalb eines vorgebbaren Zeitfensters detektiert, um Ausgangspulse (FP) gleicher Zeitdauer (TM) zu erzeugen, und daß die Taktschaltung (A) eine zweite Schaltung (PLL) enthält, die der ersten Schaltung (MFLP) nachgeschaltet ist und die aus den Ausgangspulsen (FP) durch Synchronisation auf dessen Flanken den Signaltakt (C) regeneriert.

10. Optischer Empfänger nach Anspruch 8,
**gekennzeichnet durch** eine Detektorschaltung (13), die zur Veänderung des Schwellwertes (SET) des mindestens einen getakteten Schwellwertentscheiders (2), den das rückgekoppelte Filter (14) enthält, das Ausgangssignal (11) des Filters mit dem um die Filterdurchlaufzeit (T14) verzögerten Eingangssignal (1) vergleicht und daraus eine Signalgüte (Ueye) des entzerrten Ausgangssignales (11) ableitet, die den Schwellwert (SET) bestimmt.
